# EUROPEAN PATENT APPLICATION

(11) **EP 4 586 076 A1**
(43) Date of publication of application: **16.07.2025**
(21) Application number: 25151305.7
(22) Date of filing: 10.01.2025
(51) Int. Cl.: G06F 8/33, G06F 8/70, G06F 8/75, G06F 8/72, G06F 8/73

(54) **GRAPH-BASED CODE REPRESENTATION FOR PROMPT GENERATION OF SOFTWARE ENGINEERING TASKS**

(30) Priority: 12.01.2024 US 202418412145
(71) Applicant: Microsoft Technology Licensing, LLC, Redmond, WA 98052 (US)
(72) Inventor: MCMORRAN, Benjamin John, Redmond, Washington (US); TODIREL, Ion, Redmond, Washington (US); MIHALCEA, Bogdan Ionut, Redmond, Washington (US)
(74) Representative: CMS Cameron McKenna Nabarro Olswang LLP

(57) **Abstract**

A graph-based representation of a source code program is generated in a background process of an edit session of a software development tool. The graph is used to facilitate the construction of a context for a prompt to a large language model that answers a user's query regarding the source code program in the edit session. The graph contains nodes that represent functions, macros, and types of the program and edges that depict a usage or definitional relationship between two connected nodes. The edges are generated from internal data structures generated from compiler-related analyses performed on the source code program in a background process. The graph is traversed to generate a sequence of code directives that provide the model with a structure of the source code program that includes data from the internal data structures not apparent from or contained in the source code program.

## Description

### BACKGROUND

A large language model is a type of machine learning model trained on a massively-large training dataset of text and/or source code and contains billions of parameters. The large language model is used to perform various tasks such as natural language processing, text generation, machine translation, and source code generation. The large language model is formed from deep learning neural networks such as a neural transformer model with attention.

The large language model is typically given a user prompt that consists of text in the form of a question, an instruction, short paragraph and/or source code, where the prompt instructs the model to perform a task given data and/or indicates the format of the intended response. When the task pertains to source code that the model has not seen during training, the large language model performs poorly generating vague and/or useless responses.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A user, during the edit session, issues a query pertaining to a source code program in the source code editor. The query initiates a software engineering task that is to be performed by the large language model to generate a response to the user query. A prompt to the large language model is created for the model to perform the task and respond to the user query. The prompt includes a context relevant to the query which is extracted from a graph-based representation of the source code program.

The graph-based representation of the source code program is generated in a background process of the user's edit session. The graph-based representation depicts the source code in a different structure than the source code itself since it includes data from internal data structures generated from static analysis tools, such as those typically generated during compilation. The graph is traversed to generate a sequence of code directives that form the context of the prompt.

These and other features and advantages will be apparent from a reading of the following detailed description and a review of the associated drawings. It is to be understood that both the foregoing general description and the following detailed description are explanatory only and are not restrictive of aspects as claimed.

### BRIEF DESCRIPTION OF DRAWINGS

Figs. 1A-1B illustrates an exemplary graph-based code representation for an exemplary source code program.
Fig. 2 illustrates an exemplary prompt to a large language model for a code summarization task and the response from the model.
Fig. 3 is a schematic diagram of an exemplary system that utilizes the graph-based code representation for prompt generation of software engineering tasks.
Fig. 4 is a flow chart illustrating an exemplary method of the system in utilizing the graph-based code representation in a software development tool.
Fig. 5 is a flow chart illustrating an exemplary method for generating the graph-based code representation.
Fig. 6 is a flow chart illustrating an exemplary method for traversing the graph and generating the code directives.
Fig. 7 is a block diagram illustrating an exemplary operating environment.

### DETAILED DESCRIPTION

### Overview

A graph-based representation of a source code program is generated during an edit session to facilitate the construction of a context for a user query pertaining to the source code program. The graph-based code representation of the source code program includes data from internal data structures generated from static analysis tools of a compiler which represent the relationships between different code elements in the source code program not readily apparent from the source code or contained in the source code program. These relationships pertain to the usage and definition of code elements within all the files of the source code program.

A code element represents a segment of source code that corresponds to a non-terminal symbol of a production rule of the grammar of the programming language that is used or defined in a file of the source code program. The usage of a code element pertains to where the code element is used in the source code program and the definition of the code element pertains to where the code element is defined.

The graph-based code representation or graph is generated in a background process of a source code development tool, such as a code editor or integrated development environment. The graph includes nodes and edges where a node represents a code element of the source code program and an edge represents a relationship between two nodes. The graph includes the code elements used and defined in all the files associated with the program including those outside of the current edit session.

A node includes the filename of the file where the code element is present, the line numbers in the file where the code element is found, a node type and a node value. A node type describes the code element, such as a file, function, type, macro, function call, a function definition, a function template definition, a function template use, class template definition, and class template use. An edge represents a usage or definitional relationship between two nodes. An edge represents "contains,' "is defined by," "is referenced by," "writes to," "reads from," "calls to," "is called by," extends," "is extended by," "was produced by template," "is defined by a typedef to be," and "is inlined into."

The edges of the graph are constructed from information provided from a language service. A language service is a collection of language intelligence tools, such as static code analyzers, data flow analyzers, and control flow analyzers that generate internal compiler data structures, such as symbol type data, control flow information, definition-use chains, use-definition chains and the like.

A context is used in a prompt to a large language model for the large language model to perform a task that responds to the user query. The context includes the information from the graph that is relevant to the user query. The context contains one or more code directives where a code directive contains the data from a node and edge of the graph deemed relevant to the user query.

A software engineering task is an automated activity used to create, develop, maintain, build and/or test source code. Software engineering tasks include code completion, code generation, source code bug identification, source code bug repair, code summarization (e.g., a summary explaining how a code element operates in a program), code documentation (e.g., comments in the source code explaining how a portion of source code works and how to use it), and answering user queries about the code.

Source code understanding is needed by the large language model to perform the various software engineering tasks. Often the large language model is trained to learn to perform a particular task from a training dataset of source code samples. However, the source code samples alone may not provide enough data for the large language model to learn to make a useful prediction. The code directive provides additional information to the large language model to learn to perform a target software engineering task.

For example, a source code segment that is partially-formed is often used as a context for code completion. However, the partially-formed source code segment does not provide data pertaining to how the variables or functions invoked in the partially-formed source code segment are defined or used. The inclusion of this additional data allows the large language model to learn the semantics of the partially-formed source code segment thereby generating a more useful response. In this manner, the large language model learns the structure, syntax and semantics of the source code program without having been trained on the programming language of the source code or trained on the software engineering task to generate a more meaningful response.

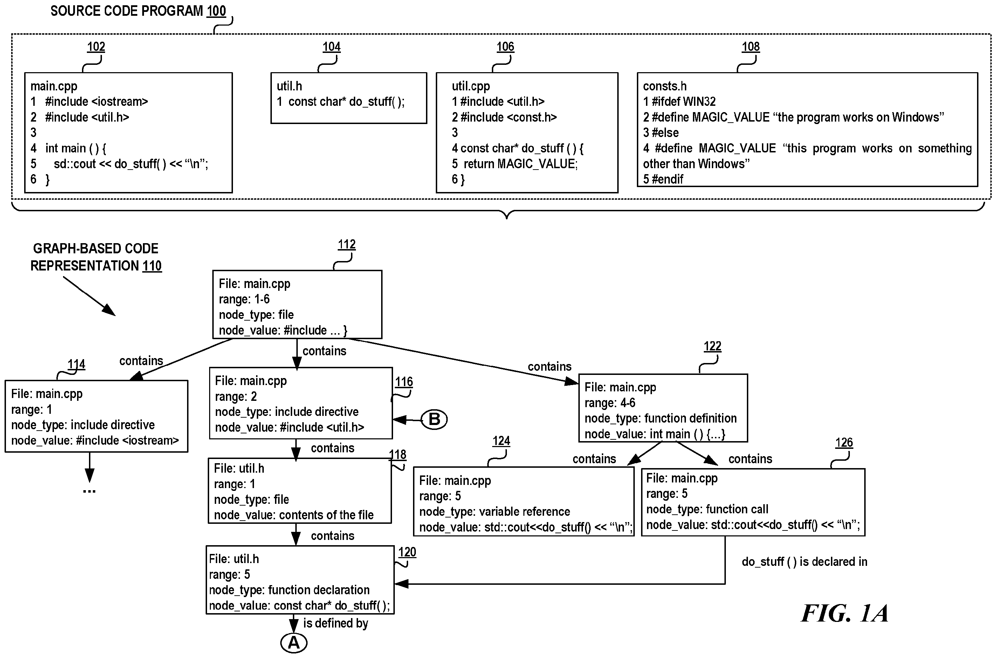

Turning to Figs. 1A-1B, there is shown an exemplary graph-based code representation of a source code program written in C++. The source code of the source code program 100 is contained in four files: main.cpp 102; util.h 104; util.cpp 106; and consts.h 108. Main.cpp 102 contains the function or method *main ( )* which contains a function invocation to the function *do_stuff ( )* which is defined in the header file, util.h, and the function body is contained in util.cpp. The function *do stuff ( )* utilizes the macro MAGIC_VALUE which is defined in the header file consts.h.

The source code program 100 is represented by graph 110. The graph 110 contains nodes connected by edges. A node represents a code element. A node contains a filename of the file containing the code element, the range of line numbers where the code element is used or defined, a node type and a node value. A node type describes the code element, such as, a function call, a function definition, a function template definition, a function template use, class template definition, and class template use. A function or method is a sequence of source code statements packaged as a unit to perform a particular task. A function call is an invocation of a function. A function definition or method signature contains the function name, return type and parameters. A function template defines a family of functions that only differ by the types of their return values or arguments. A function template definition contains the function name, return type and parameters of a function within the function template. A function template use is a source code statement that uses a function template. A class template defines how a group of classes can be generated in a generic way allowing it to be instantiated with different types. A class template definition contains a class name and the template definitions of the class. A class template use is a source code statement that uses the class template.

An edge links two related nodes of the graph. The edge represents a relationship between the two nodes. In an aspect, an edge represents the usage and definition relationships between two code elements. An edge represents "is defined by," "is referenced by," "writes to," "reads from," "calls to," "is called by," extends," "is extended by," "was produced by template," "is defined by a typedef to be," and "is inlined into."

The graph 110 represents the source code program 100. The graph 110 includes a node for the file definition of main.cpp 112 which has edges to nodes 114, 116, 122. The node 112 includes the filename main.cpp, the line number ranges of 1-6, a node_type of file, and a node_value that includes the source code of the entire file.

Node 114 represents the include directive for #include <iostream>, node 116 represents the include directive for #include <util.h>, and node 122 represents the function definition or method body of *main ()*. Nodes 114, 116, and 122 represent the code elements contained in the file main.cpp.

Node 114 contains the filename main.cpp, a range of 1, a node_type of include directive and a node _value of #include <iostream>. Node 116 contains the filename main.cpp, a range of 2, a node_type of include directive, and a node_value of #include <util.h>. Node 122 contains the filename main.cpp, range of 4-6, a node_type of function definition, and a node _value that includes the source code in lines 4 - 6.

Node 118 represents the util.h file since it is contained in the #include <util.h> directive and node 120 represents the function declaration of *do stuff( )* found in util.h. Node 116 has an edge to node 118 since the util.h file is contained in the include directive. Node 118 has an edge to node 120 since the function declaration of *do stuff( )* is contained in the util.h file of node 118. Node 120 has an edge to the function definition of *do stuff()* in node 132 since it is defined in node 120.

Node 122 represents the function definition of *main ()* which is contained in node 112. Node 124 represents the variable references *std* and *cout.* Node 124 has a node type of variable reference and a node value that includes the source code that uses these variables. The edge between node 122 and node 124 represents the "contains in" relationship since the source code of node 122 contains a variable reference to the source code of node 124. Node 126 represents the function call to *do stuff()* from the function *main ( )*. Node 126 has a node type of function call and the node value is the source code statement of the function invocation. The edge between node 122 and node 126 represents the "contains in" relationship since the source code of node 122 contains the function call of node 126.

Node 126 has an edge to node 120 which represents that the function *do_stuff( )* is defined-by the function declaration in node 120.

Node 128 represents the file util.cpp. Node 128 has an edge to node 116 since node 116 represents the #include <util.h> directive contained in node 128. Node 128 has an edge to node 130 which represents the #include <const.h> contained in node 128. Node 128 has an edge to node 132 which represents the function definition of *do stuff ( )* since *do stuff ( )* is contained in the file of node 128.

Node 130 contains an edge to node 134 which represents the file const.h. The file const.h is contained in the include directive of node 130. The file const.h contains two macro definitions which are contained in nodes 138 and 140 respectively.

Node 120 contains an edge to node 132 since the *do_stuff ( )* function declaration is defined by the function definition of node 132. The function definition of *do stuff ( )* contains a macro reference to MAGIC_VALUE which is represented by node 136. The macro MAGIC_VALUE of node 136 is defined by the macro definitions of node 138 and 140.

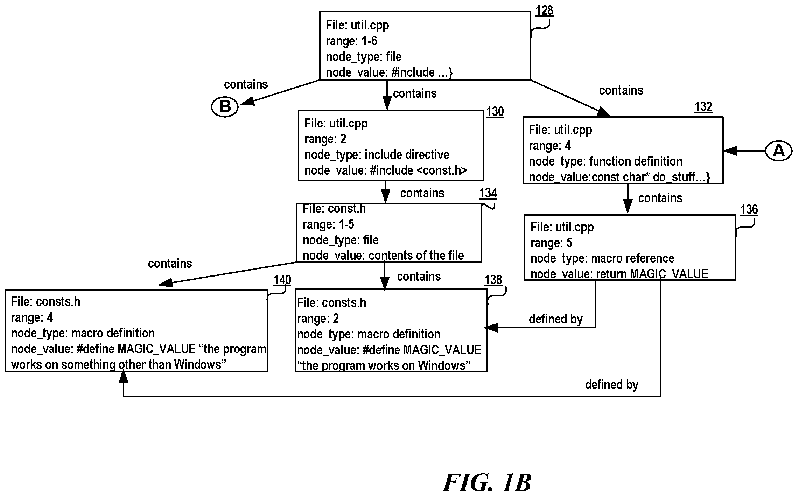

It should be noted that the source code program shown in Fig. 1 is written in C++ and that the techniques described herein are not limited to the C++ programming language. The term "function" is not limited to a C++ function and also refers to a method in other programming languages. The term "function declaration" also refers to a method signature and the term "function definition" also refers to a method body.

Attention now turns to a more detailed description of the system, device, and methods for the graph-based code representation for prompt generation of software engineering tasks.

### System

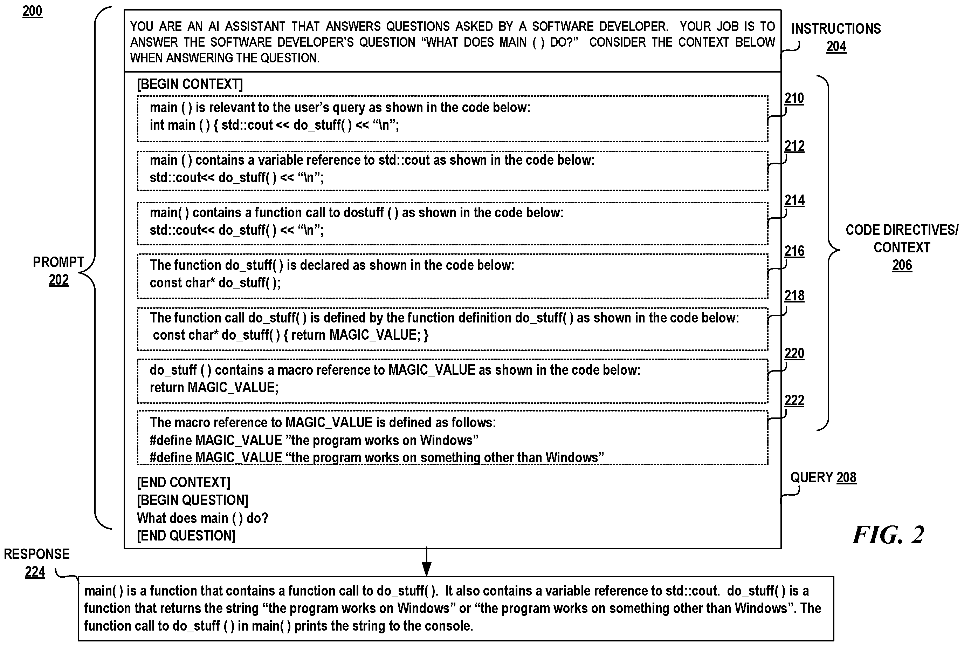

Fig. 2 illustrates an exemplary prompt and response 200. Turning to Figs. 1A-B and 2, the large language model is given a prompt 202 that consists of text in the form of a question, an instruction, short paragraph and/or source code to instruct the model to perform a task and optionally, format of the intended response. In order for the large language model to make a prediction for a task that it has not been trained on or to make a prediction on input not seen during training, the prompt to the model includes a context that provides relevant background that guides the model towards generating a more accurate response.

As shown in Fig. 2, the prompt 202 includes instructions 204, a sequence of code directives or context 206, and a query 208. The instructions provide the model with an explanation of the task and include, in part, the query, "What does main ( ) do?" 208. The context 206 includes the code directives derived from the graph-based representation of the source code program that are relevant to the query.

The code directives contain the information from the nodes and edges of the graph that relate to the query. The relevant code directives are extracted from a breadth-first traversal of the graph starting from the node representing the subject of the query which is the function definition of *main().* In this example, the context includes code directives 210 - 222. Code directive 210 contains the node information from the node 122 associated with the function definition of *main( )*, code directive 212 contains the node information from node 124 associated with the variable references of *main(),* code directive 214 contains the node information from node 126 associated with the function call to *do stuff()* from *main(),* code directive 216 contains the node information from node 120 associated with the function declaration of *do_suff( ),* code directive 218 contains the node information from node 120 associated with the function definition of *do stuff ( )*, code directive 220 contains the node information from node 136 associated with the macro reference of MAGIC_VALUE, and code directive 222 contains the node information from nodes 138, 140 associated with the macro definitions for the macro MAGIC_VALUE.

The prompt is sent to the large language model which returns a response 224. For this example, the model provides an answer to the query which is a code summarization of the function *main().* In some examples, the answer to the query, or response to the query, is used to automatically edit the source code. The source code may then be executed.

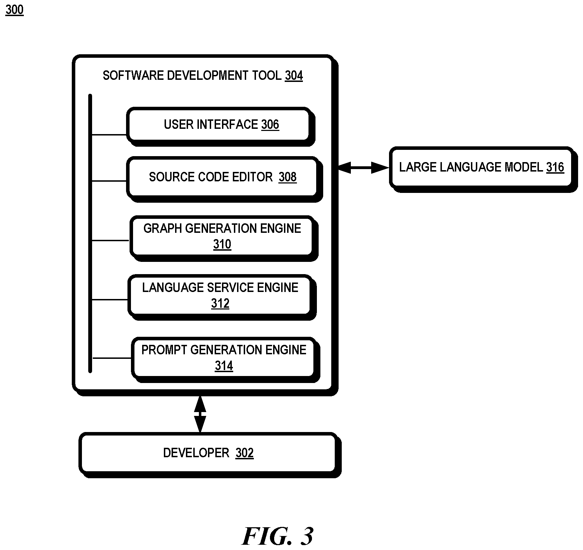

Fig. 3 illustrates an exemplary system 300 that utilizes the graph-based code representation for the generation of prompts to a large language model to perform a software engineering task.

A developer or user 302 interacts with a software development tool 304, such as an IDE or source code editor, to edit, develop, test, or build a source code program. The software development tool 304 may be located on a cloud server, may be local to the developer's computing device or split between the cloud server and the developer's computing device.

The software development tool 304 may include a user interface 306, a source code editor 308, a graph generation engine 310, a language service engine 312, and a prompt generation engine 314. The user interface 306 is a program that interacts with the developer 302. The source code editor 308 is a text editor program designed to edit source code. The graph generation engine 310 is a program that runs in a background process during an edit session to generate the graph-based representation of the source code in the source code editor.

The language service engine 312 is a program that utilizes a collection of language intelligence tools to maintain internal data structure generated from static code analyses of the source code program. The language service engine 312 interacts with the graph generation engine 310 to generate the edge relationships between the nodes of the graph. The prompt generation engine 314 traverses the graph to generate the code directives that form the context and construct the prompt to the large language model.

In an aspect, the large language model 316 is a neural transformer model with attention. A neural transformer model with attention is one distinct type of machine learning model. Machine learning pertains to the use and development of computer systems that are able to learn and adapt without following explicit instructions by using algorithms and statistical models to analyze and draw inferences from patterns in data. Machine learning uses different types of statistical methods to learn from data and to predict future decisions. Traditional machine learning includes classification models, data mining, Bayesian networks, Markov models, clustering, and visual data mapping.

Deep learning differs from traditional machine learning since it uses multiple stages of data processing through many hidden layers of a neural network to learn and interpret the features and the relationships between the features. Deep learning embodies neural networks which differs from the traditional machine learning techniques that do not use neural networks. Neural transformers models are one type of deep learning that utilizes an attention mechanism. Attention directs the neural network to focus on a subset of features or tokens in an input sequence thereby learning different representations from the different positions of the tokens in an input sequence. The neural transformer model handles dependencies between its input and output with attention and without using recurrent neural networks (RNN) (e.g., long short-term memory (LSTM) network) and convolutional neural networks (CNN).

There are various configurations of a neural transformer model with attention. In an aspect, the large language model is configured as an encoder-decoder neural transformer model with attention having a series of stacked encoder blocks coupled to a series of stacked decoder blocks. In another aspect, the large language model consists only of stacked decoder blocks. In addition, the large language model may be trained to perform different tasks and/or may be configured in different model sizes (i.e., different number of parameters).

In an aspect, the large language model is pre-trained on natural language text and source code. The training of a large language model requires a considerable amount of training data and computing resources which makes it impossible for some developers to create their own models. The large language model consists of billions of parameters (e.g., weights, biases, embeddings) from being trained on terabytes of data. Examples of the large language models include the conversational pre-trained generative neural transformer models with attention offered by OpenAI i.e., ChatGPT and Codex models, PaLM and Chinchilla by Google, and LLaMa by Meta.

In an aspect, the large language model may be hosted in a remote server whose access is offered as a service where access to the large language model may be given through application programming interfaces (APIs) to an endpoint. In another aspect, the large language model may be part of the software development tool and reside locally on the developer's computing device.

### Methods

Attention now turns to description of the various exemplary methods that utilize the system and device disclosed herein. Operations for the aspects may be further described with reference to various exemplary methods. It may be appreciated that the representative methods do not necessarily have to be executed in the order presented, or in any particular order, unless otherwise indicated. Moreover, various activities described with respect to the methods can be executed in serial or parallel fashion, or any combination of serial and parallel operations. In one or more aspects, the method illustrates operations for the systems and devices disclosed herein.

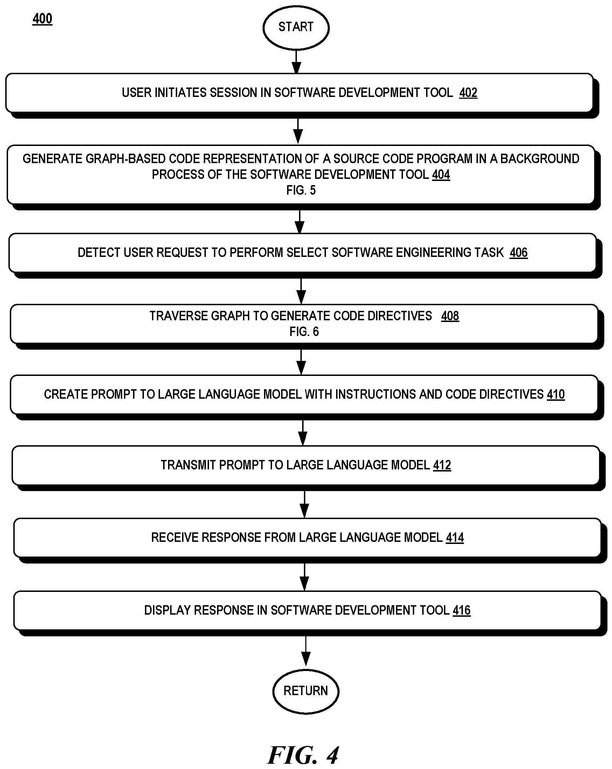

Fig. 4 illustrates an exemplary method 400 of the system. In an aspect, the method is performed in a software development tool, such as an IDE. However, it should be noted that the techniques disclosed herein may be performed in any application that develops, edits, maintains, builds, or displays source code, such as a web browser, source code editor or software applications that support the tasks of the Unified Modeling Language.

In an aspect, a user initiates an edit session in a software development tool (block 402). The software development tool interacts with the user through a user interface of the source code editor which displays one or more files of the source code program.

The graph generation engine executes in a background process to create and maintain the graphical representation of the source code program during the user's edit session (block 404). The graph generation engine utilizes the language service engine to obtain the relationships between the nodes of the graph (block 404).

The user interface detects a user's query that requests a software engineering task to be performed (block 406). The graph is traversed to determine the paths that relate to the query and then to construct the sequence of code directives that forms the context for the query (block 408).

The prompt generation engine creates the prompt to the large language model (block 410). The prompt contains instructions, a context that includes the code directives from the traversal of the graph, and the user query (block 410). The prompt generation engine transmits the prompt to the large language model (block 412). The prompt generation engine receives the response from the large language model (block 414) which is displayed in the user interface of the software development tool (block 416).

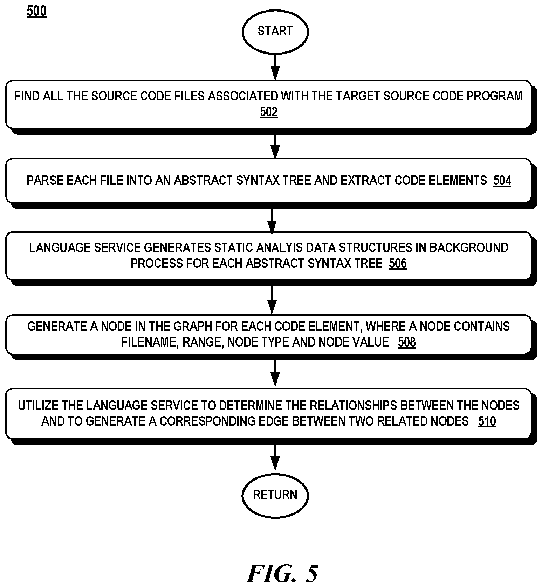

Fig. 5 illustrates an exemplary method of the graph generation engine in creating the graph 500.

The source code of a source code program may be located in several files including header files that are shared between several source code programs. In an aspect, the graph generation engine operates in a background process in the source code editor of the software development tool. The graph generation engine determines the files used by the source code program including the files that contain definitions and uses of the code element in the source code program (block 502).

The graph generation engine analyzes each source code file associated with the program and parses the source code into a respective abstract syntax tree. The parser extracts a code element from the abstract syntax tree and the range of line numbers in the source code program that correspond to the code element region. The grammar of the programming language of the source code program determines the code element of the source code program. The code elements represent the non-terminal symbols that appear on the left-hand side of a production rule of the grammar of the programming language, such as function definition, expression, function declaration, etc. (Collectively, block 504).

A context-free programming language relies on its context-free grammar to describe how to construct syntactically-correct source code. A context-free grammar, G, is defined by a 4-tuple, G = (V, T, R, S), where V is the set of non-terminal symbols, T is the set of terminal symbols, R is the set of production rules of the grammar, and S is the start non-terminal symbol used to represent the entire program. A terminal symbol is a symbol that appears in the strings generated by the grammar. A terminal symbol never appears on the left-hand side of a production rule and is always on the right-hand side. A non-terminal symbol always appears on the left-side of a production rule. A production rule is a rule for replacing a non-terminal symbol. A grammar is context-free if a production rule can be applied regardless of the context of a non-terminal. The term "set" means one or more values and does not include the empty set.

The language service engine performs several static analyses using the abstract syntax trees to construct the internal data structures. The language service engine operates in a background process of the source code editor of the software development tool. In addition to the parser generating the abstract syntax tree, the language service contains a semantic model of the program which includes a symbol table of all the symbols declared or imported into the program (i.e., namespace, type, method, property, field, event, parameter, or local variable) and their corresponding type, and additional information on the data and control flow of the program, such as def-use chain, use-def chain, control flow graph, etc. (Collectively, block 506).

An exemplary language service engine is Microsoft's^{®} Roslyn compiler (i.e., .NET compiler platform). The Roslyn compiler consists of a number of application programming interfaces (APIs) that enable access to the internal data structures generated from the compiler's analysis of the source code program in the source code editor. (Collectively, block 506).

The graph generation engine generates a node in the graph for each code element that includes the filename of the file containing the code element, the node type and the node value (block 508). The relationships between the nodes are obtained from the language service using the language service's APIs (block 510).

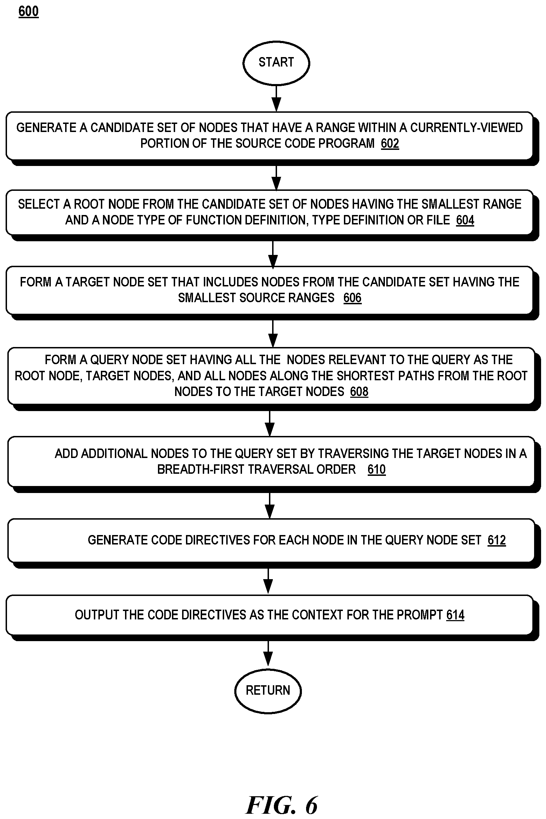

Fig. 6 illustrates an exemplary method 600 of the prompt generation engine in traversing the graph to generate the context of a prompt.

In an aspect, a user query will relate to a section of the source code currently viewed in the source code editor. A candidate set of nodes is selected from the graph that pertain to the source code currently viewed in the source code editor. Each node in the graph is associated with a range of source code line numbers. The prompt generation engine searches the graph for those nodes that having a corresponding line number range that is within the section of source code currently viewed in the editor. (Collectively, block 602).

From the nodes in the candidate set, a root node is selected as the node having the smallest number of source code lines or range, and that has a node type of function definition, type (e.g., class, struct, or enum) definition, or file. It is unexpectedly found that, the node or nodes with the smallest number of source code lines is more likely to produce context narrowly targeted to the user query rather than nodes with a larger source code range. (Collectively, block 604).

A target node set is then generated to include the nodes from the candidate set having the smallest source ranges (block 606).

Next, the prompt generation engine analyzes the nodes along a path from the root node to each target node. For each target node, the path from the root node to the target node is traversed for additional nodes not already visited. At this point, the nodes of the graph relevant to the query include the root node, each target node, and, for each target node, the nodes along the path from the root node to the target node. This set of nodes is called the query set nodes (Collectively, block 608).

Next, additional nodes are added to the query node set that are included based on a traversal of each node in the target node set using a breadth-first traversal (block 610). A breadth-first traversal visits all nodes that are one depth away from a starting point and continues down the graph to visit the nodes at the next depth of the graph. The breadth-first traversal is performed for each target node and the nodes traversed are added to the query node set if not already visited.

The prompt generation engine generates a code directive for each node in the query node set in the order the nodes were added to the query node set (block 612). The prompt generation engine then uses the sequence of code directives as the context for the prompt (block 614).

The graph traversal technique is illustrated with respect to the graph of Figs. 1A-1B and the code directives output in Fig. 2. Turning to Figs. 1A-1B and 2, assume the current active position in the source code editor is in the *main ( )* function. The candidate set is formed including all the nodes in the graph that have source code line number ranges that overlap with the *main ( )* function. This candidate set includes nodes 112, 122, 124, and 126.

Next, the root node is selected from the nodes in the candidate set. The root node has the smallest range and a node type of function definition, type definition or file. In this example, the root node is node 122.

Next, the target node set is created from the nodes in the candidate set having the smallest ranges. Nodes 124 and 126 are selected since they both have one source code line. Node 122 is not selected since it has a range of six source code lines.

Next, the query node set is constructed by considering the shortest paths from the root node to each target node. Node 124 is the first node considered from the target node set. The shortest path from the root node 122 to node 124 consists of nodes 122 and 124 which are added to the query node set in that order. Node 126 is the second node considered from the target node set. The shortest path from the root node 122 to node 126 consists of nodes 122 and 126. Since node 122 is already in the query node set it is not added and only node 126 is added. At this point, the query node set includes nodes 122, 124, and 126.

Next, each target node is traversed using a breadth-first traversal to add additional nodes to the query node set. Starting from node 124, there are no outgoing edges from node 124 so new nodes are added to the query node set. Starting from node 126, node 120 is added to the query node set, followed by nodes 132, 136, 138, and 140.

The query node set is then used to generate the context for the prompt which includes code directive 210 derived from node 122, code directive 212 derived from node 124, code directive 214 derived from 126, code directive 216 derived from node 120, code directive 218 derived from node 132, code directive 220 derived from node 136, and code directive 222 derived from nodes 138, 140.

### Exemplary Operating Environment

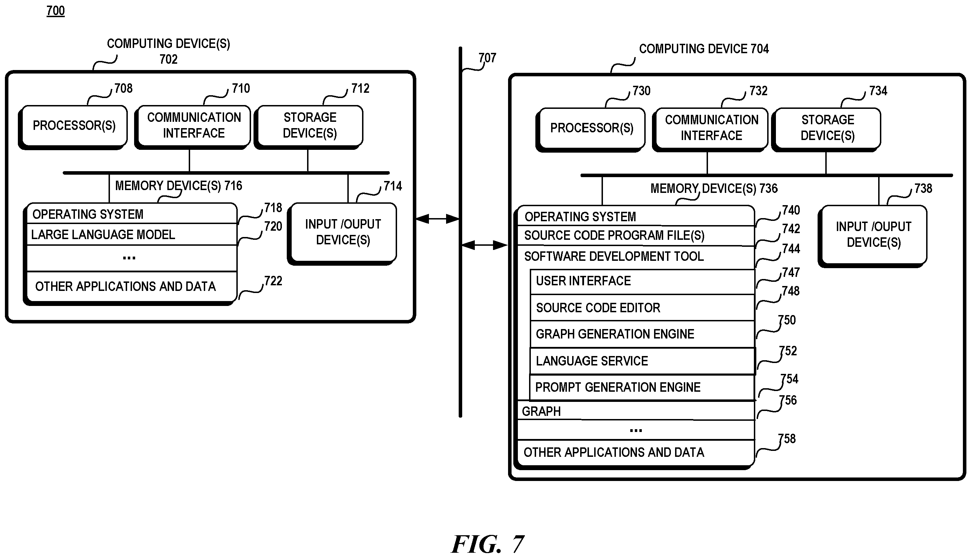

Attention now turns to a discussion of an exemplary operating environment. Fig. 7 illustrates an exemplary operating environment 700. In one embodiment, the software development tool and the large language model may reside on a single computing device. In an alternate embodiment, the large language model may be offered by a cloud service that communicates through a network with a developer's computing device hosting the software development environment. It should be noted that the embodiments are not constrained to any particular configuration of the components used to implement the techniques described herein.

The operating environment 700 includes a first computing device 702 hosting the large language model and a second computing device 704 hosting the software development tool. The first computing device 702 and the second computing device 704 are communicatively coupled to a network 706. The computing devices 702, 704 may be any type of electronic device, such as, without limitation, a mobile device, a personal digital assistant, a mobile computing device, a smart phone, a cellular telephone, a handheld computer, a server, a server array or server farm, a web server, a network server, a blade server, an Internet server, a work station, a mini-computer, a mainframe computer, a supercomputer, a network appliance, a web appliance, a distributed computing system, multiprocessor systems, or combination thereof. The operating environment 700 may be configured in a network environment, a distributed environment, a multi-processor environment, or a stand-alone computing device having access to remote or local storage devices.

A computing device 702, 704 may include one or more processors 708, 730, one or more communication interfaces 710, 732, one or more storage devices 712, 734, one or more input/output devices 714, 738, and one or more memory devices 716, 736. A processor 708, 730 may be any commercially available or customized processor and may include dual microprocessors and multi-processor architectures. A communication interface 710, 732 facilitates wired or wireless communications between a computing device 702, 704 and other devices. A storage device 712, 734 may be a computer-readable medium that does not contain propagating signals, such as modulated data signals transmitted through a carrier wave. Examples of a storage device 712, 734 include without limitation RAM, ROM, EEPROM, flash memory or other memory technology, CD-ROM, digital versatile disks (DVD), or other optical storage, magnetic cassettes, magnetic tape, magnetic disk storage, all of which do not contain propagating signals, such as modulated data signals transmitted through a carrier wave. There may be multiple storage devices 712, 734 in a computing device 702, 704. The input/output devices 714, 738 may include a keyboard, mouse, pen, voice input device, touch input device, display, speakers, printers, etc., and any combination thereof.

A memory device or memory 716, 736 may be any non-transitory computer-readable storage media that may store executable procedures, applications, and data. The computer-readable storage media does not pertain to propagated signals, such as modulated data signals transmitted through a carrier wave. It may be any type of non-transitory memory device (e.g., random access memory, read-only memory, etc.), magnetic storage, volatile storage, non-volatile storage, optical storage, DVD, CD, floppy disk drive, etc. that does not pertain to propagated signals, such as modulated data signals transmitted through a carrier wave. A memory device 716, 736 may also include one or more external storage devices or remotely located storage devices that do not pertain to propagated signals, such as modulated data signals transmitted through a carrier wave.

A memory device 716, 736 may contain instructions, components, and data. A component is a software program that performs a specific function and is otherwise known as a module, program, component, and/or application. Memory device 716 includes an operating system 718, a large language model 720, and other applications and data 722. Memory device 736 includes an operating system 740, source code program files 742, a source code development tool 744 containing a user interface 746, a source code editor 748, a graph generation engine 750, a language service 752, and a prompt generation engine 754, a graph 756, and other applications and data 758.

The network 706 may be configured as an ad hoc network, an intranet, an extranet, a virtual private network (VPN), a local area network (LAN), a wireless LAN (WLAN), a wide area network (WAN), a wireless WAN (WWAN), a metropolitan network (MAN), the Internet, a portion of the Public Switched Telephone Network (PSTN), plain old telephone service (POTS) network, a wireless network, a WiFi^{®} network, or any other type of network or combination of networks.

The network 706 may employ a variety of wired and/or wireless communication protocols and/or technologies. Various generations of different communication protocols and/or technologies that may be employed by a network may include, without limitation, Global System for Mobile Communication (GSM), General Packet Radio Services (GPRS), Enhanced Data GSM Environment (EDGE), Code Division Multiple Access (CDMA), Wideband Code Division Multiple Access (W-CDMA), Code Division Multiple Access 2000, (CDMA-2000), High Speed Downlink Packet Access (HSDPA), Long Term Evolution (LTE), Universal Mobile Telecommunications System (UMTS), Evolution-Data Optimized (Ev-DO), Worldwide Interoperability for Microwave Access (WiMax), Time Division Multiple Access (TDMA), Orthogonal Frequency Division Multiplexing (OFDM), Ultra Wide Band (UWB), Wireless Application Protocol (WAP), User Datagram Protocol (UDP), Transmission Control Protocol/ Internet Protocol (TCP/IP), any portion of the Open Systems Interconnection (OSI) model protocols, Session Initiated Protocol/ Real-Time Transport Protocol (SIP/RTP), Short Message Service (SMS), Multimedia Messaging Service (MMS), or any other communication protocols and/or technologies.

### Technical Effect

Aspects of the subject matter disclosed is an improvement to the functioning of a computer. In an aspect, the techniques described herein pertain to the practical application of question answering and in particular to the reduction of user input to a computing device to produce responses from a large language model that answer a user's query. The technical features associated with addressing this problem is the use of graph-based representation of code that includes the usage and definitional relationships between the code elements of the program that relate to the user's query. The technical effect achieved is the reduction of the number of attempts made using the computing device to obtain a useful and a more relevant response to the query thereby improving the functioning of the computer.

### Conclusion

The techniques described herein are an improvement over conventional solutions that provide a large language model with a prompt that contains source code snippets as the context for the model to perform an intended task. The use of the code directives as the context of a software engineering task provides the model with additional information on the structure of the program that is not apparent or is missing from a source code snippet. Such additional information includes the usage and definitional relationships between the various code elements of the source code program thereby enabling the model to quickly learn the structure of the program. This is beneficial when the model is not familiar with the programming language of the source code program or has not been trained on the target software engineering task.

One of ordinary skill in the art understands that the techniques disclosed herein are inherently digital. The operations disclosed herein that generate the graph-based code representation using internal compiler-related data structures, traversal of the graph to find the nodes relevant to a user query, and the construction of the prompt are complex digital operations. The human mind cannot interface directly with a CPU or network interface card, or other processor, or with RAM or other digital storage, to read or write the necessary data and perform the necessary operations disclosed herein. The embodiments are also presumed to be capable of operating at scale, within tight timing constraints in production environments (e.g., software development tool, integrated development environment, source code editor), and in testing labs for production environments as opposed to being mere thought experiments.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

A system is disclosed, comprising: a processor; and a memory that stores a program configured to be executed by the processor. The program comprises instructions that when executed by the processor perform acts that: create a graph representing a source code program in a user session of a software development tool, wherein the source code program comprises a plurality of files, wherein the graph comprises a plurality of nodes connected by edges, wherein a node represents a file, function, macro or type used or defined in the source code program, wherein an edge connects a first node to a second node and represents a usage or definitional relationship between the first node and the second node; receive a query in the user session pertaining to a task to perform on the source code program; traverse the graph to determine the nodes of the graph that are relevant to the query; generate a code directive for each relevant node, wherein the code directive comprises source code associated with a relevant node and a description of a relationship between two connected relevant nodes; create a prompt to a large language model comprising the code directives generated from the traversal of the graph; transmit the prompt to the large language model; and output in the software development tool a response from the large language model.

In an aspect, the relationship between the first node and the second node comprises at least one of: "contains," "is defined by", "is referenced by", "writes to", "reads from", "calls to", "is called by", "extends", "is extended by", "was produced by template", "is defined by a typedef to be", and "is lined into."

In an aspect, the program comprises instructions that when executed by the processor perform acts that: perform one or more static analyses on the source code program in a background process during the user session of the software development tool, wherein the one or more static analyses generate internal compiler-related data structures.

In an aspect, the program comprises instructions that when executed by the processor perform acts that: generate an edge between the first node and the second node from the internal compiler-related data structures. In an aspect, wherein the internal compiler-related data structures comprise a symbol table, def-use chains, use-def chains, and/or a control flow graph.

In an aspect, the traversal of the graph generates an ordering of the nodes that are relevant to the query. In an aspect, the task comprises code summarization, wherein the response provides an answer to the query on how a particular portion of the source code program functions.

A computer-implemented method is disclosed, comprising: obtaining a query in a user session pertaining to a task to perform on a source code program in a source code editor; accessing a graph representing the source code program in the user session of the source code editor, wherein the source code program comprises a plurality of files, wherein the graph comprises a plurality of nodes connected by edges, wherein a node represents a code element of the source code program comprising a file, function, macro or type used or defined in the source code program, wherein an edge connects a first node to a second node and represents a usage or definitional relationship between the first node and the second node, wherein a node contains a node type and a node value, wherein the node type identifies a type of the code element, wherein the node value comprises a source code snippet of an associated code element of the source code program; finding nodes of the graph that pertain to the user query; generating code directives from the nodes of the graph that are relevant to the user query, wherein a code directive contains the node type, the node value, and an associated relationship with a connected node; constructing a prompt to a large language model to generate a response to the user query, wherein the prompt includes the code directives from the nodes of the graph that are relevant to the user query; transmitting the prompt to the large language model; and outputting in the source code editor a response from the large language model.

In an aspect, the computer-implemented method further comprises: generating the graph in a background process of the user session in the source code editor. In an aspect, the relationship between two nodes comprises at least one of: "is defined by", "is referenced by", "writes to", "reads from", "calls to", "is called by", "extends", "is extended by", "was produced by template", "is defined by a typedef to be", and "is lined into."

In an aspect, finding nodes of the graph that pertain to a user query further comprises: generating a candidate set of nodes, wherein a node in the candidate set is associated with a source code line number range within a currently-viewed portion of the source code program in the source code editor.

In an aspect, the computer-implemented method, further comprises: selecting a root node from the candidate set of nodes, wherein the root node has a smallest source code line number range and a node type of function definition, type definition or file.

In an aspect, the computer-implemented method, further comprises: forming a target node set of target nodes from the candidate node set, wherein a target node has a smallest source code line number range. In an aspect, the computer-implemented method, further comprises: forming a query node set comprising the root node, the target nodes, and nodes along shortest paths from the root node to each target node. In an aspect, the computer-implemented method, further comprises: traversing the target nodes in a breadth-first traversal order to add additional nodes to the query node set.

A hardware storage device is disclosed having stored thereon computer executable instructions that are structured to be executable by a processor of a computing device to thereby cause the computing device to perform actions that: develop a graph representing a source code program in a user session of a software development tool, wherein the source code program comprises a plurality of files, wherein the graph comprises a plurality of nodes connected by edges, wherein a node represents a file, function, macro or type, wherein the file, function, macro or type is used or defined in the source code program, wherein an edge connects a first node to a second node and represents a usage or definitional relationship between the first node and the second node; obtain a query in the user session pertaining to a task to perform on the source code program while in the software development tool; search the graph to find the nodes of the graph that are relevant to the query; generate a code directive for each relevant node, wherein the code directive comprises source code associated with a relevant node and a description of the relationship between two connected relevant nodes; create a prompt to a large language model comprising the code directives generated from the relevant nodes of the graph; transmit the prompt to the large language model; and output in the software development tool a response from the large language model.

In an aspect, the hardware storage device has stored thereon computer executable instructions that are structured to be executable by a processor of a computing device to thereby cause the computing device to perform actions that: generate a semantic model of the source code program in a background process of the software development tool, wherein the semantic model comprises symbol data, data flow data and control flow data of the source code program.

In an aspect, the hardware storage device has stored thereon computer executable instructions that are structured to be executable by a processor of a computing device to thereby cause the computing device to perform actions that: utilize the semantic model to generate an edge between two nodes.

In an aspect, the graph is generated in a background process of the user session. In an aspect, the relationship between two nodes comprises at least one of: "contains," "is defined by", "is referenced by", "writes to", "reads from", "calls to", "is called by", "extends", "is extended by", "was produced by template", "is defined by a typedef to be", and "is lined into."

## Claims

1. A system (700), comprising:
a processor (730); and
a memory (736) that stores a program configured to be executed by the processor, the program comprising instructions that when executed by the processor perform acts that:
create a graph representing a source code program in a user session of a software development tool (404), wherein the source code program comprises a plurality of files, wherein the graph comprises a plurality of nodes connected by edges, wherein a node represents a file, function, macro or type used or defined in the source code program, wherein an edge connects a first node to a second node and represents a usage or definitional relationship between the first node and the second node;
receive a query in the user session pertaining to a task to perform on the source code program (406);
traverse the graph to determine the nodes of the graph that are relevant to the query (408);
generate a code directive for each relevant node, wherein the code directive comprises source code associated with a relevant node and a description of a relationship between two connected relevant nodes (408);
create a prompt to a large language model comprising the code directives generated from the traversal of the graph (410);
transmit the prompt to the large language model (412); and
output in the software development tool a response from the large language model (416).

2. The system of claim 1, wherein the relationship between the first node and the second node comprises at least one of: "contains," "is defined by", "is referenced by", "writes to", "reads from", "calls to", "is called by", "extends", "is extended by", "was produced by template", "is defined by a typedef to be", and "is lined into" (510).

3. The system of claim 1, wherein the program comprises instructions that when executed by the processor perform acts that:
perform one or more static analyses on the source code program in a background process during the user session of the software development tool, wherein the one or more static analyses generate internal compiler-related data structures (506).

4. The system of claim 3, wherein the program comprises instructions that when executed by the processor perform acts that:
generate an edge between the first node and the second node from the internal compiler-related data structures (510).

5. The system of claim 3, wherein the internal compiler-related data structures comprise a symbol table, def-use chains, use-def chains, and/or a control flow graph (506).

6. The system of claim 1, wherein the traversal of the graph generates an ordering of the nodes that are relevant to the query (408).

7. The system of claim 1, wherein the task comprises code summarization, wherein the response provides an answer to the query on how a particular portion of the source code program functions (200).

8. A computer-implemented method, comprising:
obtaining a query in a user session pertaining to a task to perform on a source code program in a source code editor (406);
accessing a graph representing the source code program in the user session of the source code editor (404), wherein the source code program comprises a plurality of files, wherein the graph comprises a plurality of nodes connected by edges, wherein a node represents a code element of the source code program comprising a file, function, macro or type used or defined in the source code program, wherein an edge connects a first node to a second node and represents a usage or definitional relationship between the first node and the second node, wherein a node contains a node type and a node value, wherein the node type identifies a type of the code element, wherein the node value comprises a source code snippet of an associated code element of the source code program;
finding nodes of the graph that pertain to the user query (602);
generating code directives from the nodes of the graph that are relevant to the user query (612), wherein a code directive contains the node type, the node value, and an associated relationship with a connected node;
constructing a prompt to a large language model to generate a response to the user query (410), wherein the prompt includes the code directives from the nodes of the graph that are relevant to the user query;
transmitting the prompt to the large language model (412); and
outputting in the source code editor a response from the large language model (416).

9. The computer-implemented method of claim 8, further comprising:
generating the graph in a background process of the user session in the source code editor (404).

10. The computer-implemented method of claim 8, comprising editing the source code using the response.

11. The computer-implemented method of claim 8, wherein finding nodes of the graph that pertain to a user query further comprises:
generating a candidate set of nodes (602), wherein a node in the candidate set is associated with a source code line number range within a currently-viewed portion of the source code program in the source code editor.

12. The computer-implemented method of claim 11, further comprising:
selecting a root node from the candidate set of nodes (604), wherein the root node has a smallest source code line number range and a node type of function definition, type definition or file.

13. The computer-implemented method of claim 12, further comprising:
forming a target node set of target nodes from the candidate node set (606), wherein a target node has a smallest source code line number range.

14. The computer-implemented method of claim 13, further comprising:
forming a query node set comprising the root node, the target nodes, and nodes along shortest paths from the root node to each target node (608).

15. The computer-implemented method of claim 14, further comprising:
traversing the target nodes in a breadth-first traversal order to add additional nodes to the query node set (610).
